# EUROPEAN PATENT APPLICATION

(11) **EP 2 728 666 A1**
(43) Date of publication of application: **07.05.2014**
(21) Application number: 12190752.1
(22) Date of filing: 31.10.2012
(51) Int. Cl.: H01Q 1/30, H01Q 1/34, G01S 13/90, G01S 13/87

(54) **Elevated radar system**

(71) Applicant: THALES NEDERLAND B.V., 7550 GD Hengelo (NL)
(72) Inventor: Jongsma, Wiegard, 7558 NE Hengelo (NL); Anbeek, Hugo, 6841 KN Arnhem (NL); Van der Berg, Simon, 7552 EG Hengelo (NL)
(74) Representative: Lucas, Laurent Jacques

(57) **Abstract**

Elevated radar system (1) for surveillance of targets present on sea or ground surface areas, comprising radar means (101) configured for at least emitting and receiving radar signals, characterized in that said elevated radar system (1) is comprising elevating means (10) configured for elevating said radar means(101), said elevating means (10) being configured to be attached to a carrier (11) and towed by the carrier (11).

## Description

The present invention relates to an elevated radar system. The present invention notably applies to the surveillance of targets, notably to the detection and identification thereof.

Many operations, such as surveillance operations, for instance managed by customs, police or military authorities, take place in surveillance zones covering undetermined surface areas, and most of the time in areas poorly equipped in terms of surveillance systems. For example, many military operations at sea tasked with countering piracy and smuggling are dealt with operational zones of continuously increasing areas. Thus, the forces in charge, typically naval forces, need to cover an increasingly large area for which the sensor capacity is not actually optimized. Such operations are rendered even more difficult given the fact that the detection of targets, for example small ships, is in many situations limited by the radar-horizon; moreover available sensor capacity is often inadequate for the purpose of detecting small surface threats in clutter environments.

A known solution can consist of using radar systems that are dedicated to the detection and tracking of surface targets usually found onboard of naval vessels such as frigates or patrol boats, where radar sensors can for instance be mounted on a mast structure. As stated further above, the sensor capacity is then limited by the nature of the radar systems, which may be relatively static and with a limited radar horizon, thus limited detection range.

Another known solution can consist in deploying airborne surveillance systems, for example radars onboard aircraft such as airplanes, drones or helicopters, or even spacecrafts. However such deployments can be very costly in terms of required equipments and human resources. Besides, such deployments can be easily detected and possibly evaded by the targets under surveillance.

The present invention aims to palliate the drawbacks that are inherent to the above referred-to known solutions of the prior art, by proposing a radar system that is both cost efficient, flexible and scalable and provides improved detection and tracking performance.

Thus, an advantage provided by the present invention in any of its aspects is that it provides a radar system that can be quickly deployed, offering a low maintenance cost and allowing surveillance of large areas that do not need to be defined in advance, while provided an improved detection range because of an increased radar-horizon.

For that purpose, the current invention proposes an elevated radar system for surveillance of targets present on sea or ground surface areas, comprising radar means configured for at least emitting and receiving radar signals, said elevated radar system being comprising elevating means configured for elevating said radar means, said elevating means being configured to be attached to a carrier and towed by the carrier by means of a towing cable.

In an exemplary embodiment of the invention, an elevated radar system can comprise a platform attached to said towing cable, said platform being comprising the radar means.

In an exemplary embodiment of the invention, an elevated radar system can further comprise an articulation, the radar means being attached to the platform by means of the articulation.

In an exemplary embodiment of the invention, an elevated radar system can further comprise a radome, the radome being encapsulating the radar means.

In an exemplary embodiment of the invention, the radome can be made of a polymer or plastic material.

In an exemplary embodiment of the invention, the radome can be configured for being at least water-proof and to be able to float on water surface.

In an exemplary embodiment of the invention, the radome can comprise shock absorbing means.

In an exemplary embodiment of the invention, an elevated radar system can further comprise communication means, for exchanging data with communication means located at a remote location.

In an exemplary embodiment of the invention, the communication means can be radiofrequency communication means.

In an exemplary embodiment of the invention, the communication means can be shared with the radar means.

In an exemplary embodiment of the invention, the radome can comprise autonomous power supply means.

In an exemplary embodiment of the invention, the radome can comprise localization means.

In an exemplary embodiment of the invention, the elevating means can be formed by a parachute, a parafoil or a kite.

In an exemplary embodiment of the invention, the articulation can be formed by a plurality of shafts linked by a plurality of joints, and can be attached to a frame forming the platform, to which the elevated means are attached.

In an exemplary embodiment of the invention, the towing cable can comprise at least one electrically conductive material, allowing transmitting electrical power between the radar means and the carrier.

In an exemplary embodiment of the invention, the carrier can be a water vehicle or a ground vehicle.

In an exemplary embodiment of the invention, the radar means can comprise a synthetic aperture radar.

Another aspect of the current invention is a global surveillance system, **characterized in that** it comprises a network comprising a plurality of elevated radar systems as per any of the described embodiments.

A radar system according to the current invention can be denoted as an "Elevated Radar System" and can be elevated to an altitude allowing it to cover a larger surveillance area, compared to radar systems that are onboard water or ground vehicles, with the advantage to be cost-effective against radar systems that are mounted onboard air vehicles such as airplanes or drones. The current invention proposes that the radar system comprises elevating means intended to elevate radar sensors.

The vehicle can be part of naval forces or their assets, and can for example be an inflatable boat.

These and other characteristics and advantages of the invention will be made clearer in view of the detailed description given below of a preferred embodiment, provided by way of an illustrative and non-limiting example, as well as the accompanying drawings.

Figure 1, a simplified view illustrating an elevated radar system as per an exemplary embodiment of the invention;

Figure 2, a simplified view illustrating an elevated radar system attached to a platform comprised in an elevated radar system, as per an exemplary embodiment of the invention;

Figure 3, a simplified view illustrating an elevated radar system, more specifically focussing on an articulation thereof, in an exemplary embodiment of the invention.

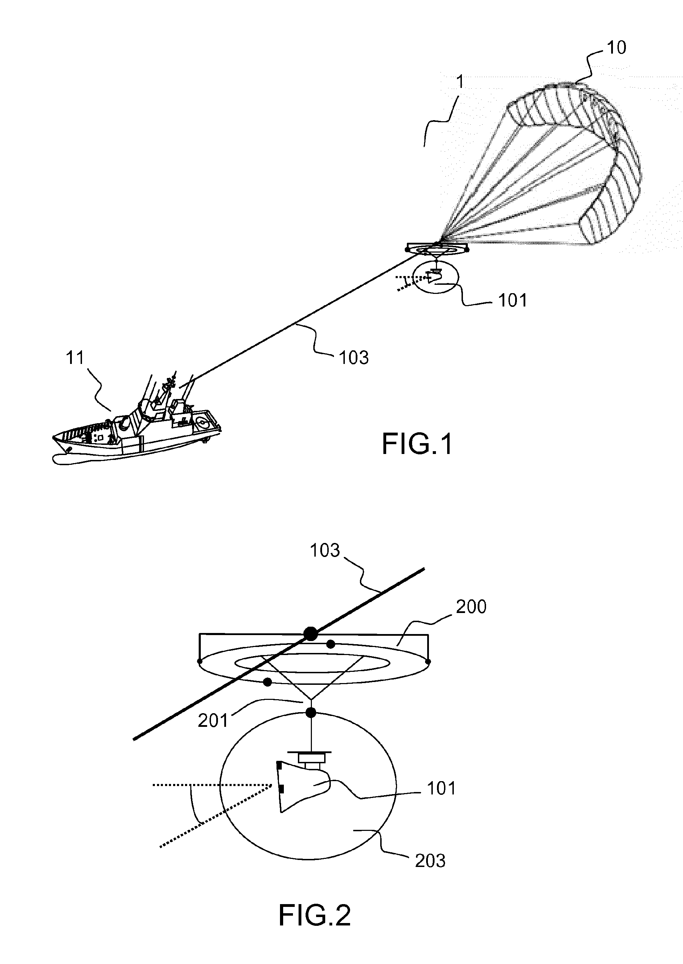

In reference to Figure 1, an elevated radar system 1 according to an exemplary embodiment of the current invention can comprise elevating means 10. In the illustrated example, the elevating means are formed by a parafoil or kite. The parafoil or kite can be towed by a carrier 11, which can be a water vehicle such as a boat as in the illustrated example, by means of a towing cable 103.

An elevated radar system 1 further comprises actual radar means 101, which are attached to the towing cable 103 in the illustrated example. The radar means 101 can also be attached to the elevating means 10 themselves. The radar means 101 are preferred to be mounted on the towing cable, as close as possible to the elevating means 10.

The elevating means 10 can also be formed by a parachute. The parafoil, kite or parachute can be electronically stabilized, for instance in a way similar to skysails using a control box attached to the towing cable which can consist of a plurality of single towing cables, each single towing cable being attached to a different part of elevating means 10, enabling to use the towing cable for stearing the elevating means 10. Advantageously such elevating means can be stored in an efficient and compact manner on board of the carrier, or from a naval vessel to which the carrier belongs. Also deployment of such elevating means is fast, simple and the elevating means can be self-contained as they do not require additional means for deployment.

When the carrier 11 is moving, the radar means 101 are elevated in the air, thanks to the elevating means 10.

The carrier can for example be part of naval forces or their assets, such as a Rigid Inflatable Boat or Rigid-Hulled Inflatable Boat, usually designated respectively by the acronym RIB or RHIB, or such as a Fast Raiding Interception and Special forces Craft, usually designated by the acronym FRISC, or such as a larger navy vessel, like a frigate for instance. The use of RHIBs or FRISC notably allow for fast deploying of a surveillance systems, on demand, in wide operation areas.

The radar means 101 can comprise at least emitting means and receiving means, themselves further comprising at least one antenna for combined emission / reception or a plurality of antennae for emission and reception or radar signals and echoed signals. The radar means 101 can be optimized for detecting and tracking small surface targets as well as conventional targets like ships, helicopters and aircraft. The radar means 101 can further comprise processing means, configured to perform the usual processing required in a radar system, for the purpose of detecting and/or tracking targets. The processing means can be either located level with the radar means 101, or can be located away from the radar means 101. For instance, the processing means can be located on the carrier 11 itself, or on a station located elsewhere. Also, part of the required processing, such as basic pre-processing, can be performed in processing means located level with the radar means 101, while some other part of the processing, such as computations requiring heavier computing resources, can be located in remote locations. The radar means 101 can further comprise typical means usually comprised in mobile radar devices, such as localization means, means for determining the attitude, such as an inertial measurement unit, and / or accelerometers for measuring accelerations caused by movements of the elevating means.

The radar means 101 can advantageously be supplied with power through the towing cable 103 itself, which can be at least partly made of a current conducting material. The towing cable 103 can for instance comprise a conductive part and an actual towing part.

Data communication between the radar means 101 and the carrier 11 or any remote station likely to receive data communication from the radar means 101, can be also performed through the towing cable 103, and possibly through other means between the carrier 11 and a remote station if need be.

Advantageously, data communication can be performed by means of wireless communication means, for example through radiofrequency signals, such as Wi-Fi or UltraWide Band. In such a case, the radar means can further comprise wireless communication means.

Advantageously, the radar means 101 can be also used for transmitting data. For example, it is possible to enable a communication making use of a radar antenna, by means of using waveforms such as Orthogonal Frequency-Division Multiplexing waveforms, commonly denoted as OFDM waveforms, or similar waveforms. One advantage provided by such communication means is that the used signals are less propitious to jamming.

Advantageously, a global surveillance system can comprise a network of a plurality of elevated radar systems as in the described embodiments. In such a case, each elevated radar system, or radar means comprised in each elevated radar system, in the global surveillance system can communicate data to a central station, for example located on a vehicle or in a remote station, where the received data can be aggregated for the purpose of building surveillance reports.

Advantageously, the radar means can be attached to a platform, which can further be stabilized, i.e. the radar means are isolated from external movements to achieve a stable radar beam pointing. An exemplary platform is described in details hereinafter, in reference to figure 2, which presents a simplified view illustrating a sensor, platform and articulation and radome.

In reference to figure 2, the elevated radar system can comprise a platform 200 attached to the towing cable 103. The radar means 101, as described above in reference to figure 1, can be attached to the platform through an articulation 201. The platform 200 and the articulation 201 thus form a stabilized mounting for the radar means 101, allowing keeping the radar means 101 stabilized in spite of the elevating means movements.

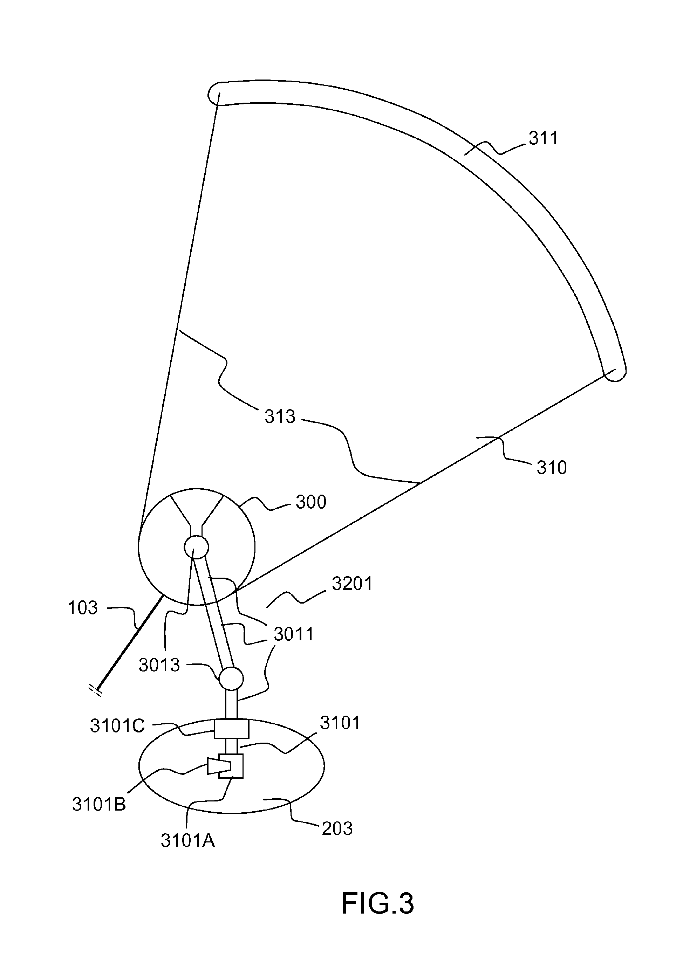

The articulation 201 can for example be formed by a cardanic linkage. An exemplary embodiment of an articulation if described in details below in reference to figure 3.

Advantageously, the radar means 101 can be encapsulated by a radome 203. The radome 203 allows protecting the radar means 101 notably against water, weather conditions, and possible obstacles. The radome 203 may also encapsulate radar means together with the platform 200 or part of the platform 200 for instance the articulations 201 or part of the articulations 201. The radome 203 is designed so as to be water-resistant, as well as transparent to radiofrequency signals, but also so as to be able to float on the water, even when it is comprising the radar means 101. For example, the radome can be of spherical shape, and made with a plastic or polymer material, in a way similar to spherical buoys. In this way, it is for example possible to let the radome 203 and its contents float on the water, before it is actually elevated by being towed. Also, it is possible to recover the radome 203 and its content after they have felt down onto the surface of the water.

Advantageously, the radome 203 can be designed so as to be shock-resistance, so that the radar means 101 cannot be damaged, for example in case it falls down to the floor or surface water. To that end, the material forming the radome 203 can be chosen so as to be soft enough, in order to substantially absorb the shocks.

Advantageously, the radome 203 can comprise additional shock absorbing means, such as inflating airbags and associated triggering means, such as accelerometers and related processing circuits.

Advantageously, the radome 203 can be used for easy deployment of the elevating means 10 and radar means 101, and recovery after finalizing the mission, as it can be lifted from and brought to the surface in a controlled way by adjusting the speed of the carrier.

Advantageously, the articulation 201 can comprise detaching means, which can for instance be triggered on demand through triggering means, for example activated by appropriate radiofrequency signals. The detaching means thus allow a user to force the radar means 101 to fall down, in case of emergency situations for instance.

Advantageously, the radome 203 can comprise additional localization means, such as a Global Navigation Satellite System, or "GNSS" transceiver, or an emergency beacon, to ease retrieving the radar means 101 once they are lying on the ground or water surface. The elevated radar system can further comprise autonomous power supply means, such as a battery, for supplying the localization means and communication means, the power supply means can be comprised in the radome 203.

Figure 3 is a simplified view illustrating an elevated radar system, more specifically focussing on an articulation thereof, in an exemplary embodiment of the invention.

In reference to figure 3, radar means 3101 can be comprised in a radome 203, in a way similar to the embodiment described above in reference to figure 2. The radar means 3101 can comprise an antenna housing 3101A notably comprising a circuitry allowing to emit and receive radar signals, through an antenna 3101B. The radar means 3101 can also comprise driving means 3101C for driving motion of the antenna 3101B and the antenna housing 3101A.

The radar means 3101 can be attached to a frame 300 forming a platform, through a plurality of shafts 3011, for example formed by torque tubes, the shafts 3011 being linked with each other by means of joints 3013.

The shafts 3011 and joints 3013 form an articulation 3201.

The joints can for example be formed by cardan joints, universal joints or "U-joints", or Hardy-Spicer joints or Hooke's joints, allowing coupling the shafts 3011 so that the articulation 3201 can bend in any direction.

In the non-limiting example illustrated by figure 3, the frame 300 can be attached to elevating means 310, for example a kite 311, by means of kite support lines 313.

Another advantage of an elevated radar system according to the current invention is that it can be implemented on either water or ground surface. The carrier, that is to say the vehicle or station used for towing the elevating means can indeed equally be a water vehicle or a ground vehicle or station.

Another advantage of an elevated radar system according to the current invention is that it can comprise a Synthetic Aperture Radar, commonly designated as a "SAR-radar" system instead of a surveillance system to make an image of a water or ground area, for instance for the purpose of detecting a man in case of man overboard or goods set overboard in case of detected smugglers.

## Claims

1. Elevated radar system (1) for surveillance of targets present on sea or ground surface areas, comprising radar means (101) configured for at least emitting and receiving radar signals, **characterized in that** said elevated radar system (1) is comprising elevating means (10) configured for elevating said radar means (101), said elevating means (10) being configured to be attached to a carrier (11) and towed by the carrier (11) by means of a towing cable (103).

2. Elevated radar system (1) following Claim 1, **characterized in that** it further comprises a platform (200) attached to said towing cable (103), said platform (200) being comprising the radar means (101).

3. Elevated radar system (1) following Claim 2, **characterized in that** it further comprises an articulation (201), the radar means (101) being attached to the platform (200) by means of the articulation (201).

4. Elevated radar system (1) following any of previous claims, **characterized in that** it further comprises a radome (203), the radome (203) being encapsulating the radar means (101).

5. Elevated radar system (1) following Claim 4, **characterized in that** the radome (203) is made of a polymer or plastic material.

6. Elevated radar system (1) following any of previous claims 4 to 5, **characterized in that** the radome (203) is configured for being at least water-proof and to be able to float on water surface.

7. Elevated radar system (1) following any of previous claims 4 to 5, **characterized in that** the radome (203) comprises shock absorbing means.

8. Elevated radar system (1) following any of previous claims, **characterized in that** it further comprises communication means, for exchanging data with communication means located at a remote location.

9. Elevated radar system (1) following Claim 8, **characterized in that** the communication means are radiofrequency communication means.

10. Elevated radar system (1) following Claim 8, **characterized in that** the communication means are shared with the radar means (101).

11. Elevated radar system (1) following any of previous claims 4 to 10, **characterized in that** the radome (203) comprises autonomous power supply means.

12. Elevated radar system (1) following any of previous claims 4 to 11, **characterized in that** it the radome (203) comprises localization means.

13. Elevated radar system (1) following any of previous claims, **characterized in that** said elevating means (10) are formed by a parachute, a parafoil or a kite.

14. Elevated radar system (1) following any of previous claims 3 to 13, **characterized in that** the articulation (201, 3201) is formed by a plurality of shafts linked by a plurality of joints (3013), and is attached to a frame (300) forming a platform, to which the elevated means are attached.

15. Elevated radar system (1) following any of previous claims, **characterized in that** the towing cable (103) comprises at least one electrically conductive material, allowing transmitting electrical power between the radar means (101) and the carrier (11).

16. Elevated radar system (1) following any of previous claims, **characterized in that** the carrier (11) is a water vehicle or a ground vehicle.

17. Elevated radar system (1) following any of previous claims, **characterized in that** said radar means (101) comprise a synthetic aperture radar.

18. Global surveillance system, **characterized in that** it comprises a network comprising a plurality of elevated radar systems (1) as per any of previous claims.
